**Europäisches Patentamt**

**European Patent Office**

**Office européen des brevets**

(19)

(11) Veröffentlichungsnummer: **0 333 652**
**B1**

(12)

# EUROPÄISCHE PATENTSCHRIFT

(45) Veröffentlichungstag der Patentschrift:
**13.06.90**

(51) Int. Cl.⁵: **E03D 9/14**, E03D 1/34,
F16K 47/04

(21) Anmeldenummer: **89810169.6**

(22) Anmeldetag: **06.03.89**

(54) **Vorrichtung zur Geräuschdämpfung des Wasseraustritts, insbesondere durch das Auslaufventil eines Klosettspülkastens.**

(30) Priorität: **16.03.88 CH 987/88**

(43) Veröffentlichungstag der Anmeldung:
**20.09.89 Patentblatt 89/38**

(45) Bekanntmachung des Hinweises auf die Patenterteilung:
**13.06.90 Patentblatt 90/24**

(84) Benannte Vertragsstaaten:
**AT DE FR NL**

(56) Entgegenhaltungen:
**FR-A- 1 574 719**
**US-A- 2 638 929**
**US-A- 3 144 664**
**US-A- 3 665 964**

(73) Patentinhaber: **Geberit AG, Schachenstrasse 77, CH-8645 Jona(CH)**

(72) Erfinder: **Stromski, Kasimir, Kafkaweg 8/026, D-7000 Stuttgart 40(DE)**
Erfinder: **Jöhri, Haimo, Hummelbergstrasse 66, CH-8645 Jona(CH)**

(74) Vertreter: **Groner, Manfred et al, Patentanwalts-Bureau Isler AG Walchestrasse 23, CH-8006 Zürich(CH)**

## Beschreibung

Die Erfindung betrifft eine Vorrichtung nach dem Oberbegriff des unabhängigen Patentanspruchs 1.

Eine derartige Vorrichtung ist aus der US-A 3 144 664 bekannt.

Die Wassergeräusche bei der Betätigung eines Auslaufventils sind besonders bei Klosettanlagen störend, da diese oft auch in der Nacht auftreten. Zur Geräuschdämpfung beim Füllen des Spülkastens sind wirksame Massnahmen am Einlaufventil bekannt. Parktikable Vorschläge zur Dämpfung der Geräusche bei der Spülung sind bisher jedoch nicht bekannt geworden. Ein solcher Vorschlag müsste die Bedingung erfüllen, dass eine wirksame Spülung auch ohne Minderung des üblichen Spülstromes und ohne wesentliche Aenderung der Spüldauer gewährleistet ist.

Der Erfindung liegt somit die Aufgabe zugrunde, eine Vorrichtung der Eingangs genannten Art zu schaffen, mit der die Wassergeräusche bei der Betätigung des Auslaufventils ohne wesentliche Aenderung der Spülleistung sehr weit herabgesetzt werden. Die Aufgabe wird durch die Erfindung gemäss Anspruch 1 gelöst.

Versuche mit Klosettspülkästen haben gezeigt, dass durch die erfindungsgemässe Vorrichtung die zu Beginn der Spülung entstehenden Geräusche um etwa 10 dB(A) herabgesetzt werden. Diese Geräusche weisen bei üblichen Klosettspülkästen eine kurzzeitige Spitze von etwa 40 dB(A) auf. Durch die erfindungsgemässe Vorrichtung wird der anfängliche impulsartige Ausströmvorgang zeitlich gedehnt und die Strömung beruhigt. Durch diese nur kurzfristige Beeinflussung der Spülung wird deren Leistung in keiner Weise gemindert. Nach einer Weiterbildung des Anmeldungsgegenstandes ist der Körper über eine Druck- oder Zugfeder mit dem Ventilrohr verbunden. Durch die Feder wird der Körper bei nachlassendem Wasserdruck selbsttätig und kontinuierlich nach oben geschoben, und dehnt dadurch zeitlich den impulsartigen Ausströmvorgang. Durch die Erhöhung des Auslaufwiderstandes zu Beginn der Ausströmphase und anschliessende zeitliche Dehnung des Ausströmvorganges werden die Wassergeräusche besonders wirksam gemindert. Weiter vorteilhafte Ausbildungen ergeben sich aus den übrigen abhängigen Ansprüchen. Zwei Ausführungsbeispiele der Erfindung werden nachfolgend anhand der Zeichnungen erläutert. Es zeigen:

Fig. 1a einen teilweisen Vertikalschnitt durch den Auslauf eines Spülkastens mit der erfindungsgemässen Vorrichtung nach einer ersten Variante, wobei der Ablauf geschlossen ist,

Fig.1b entsprechend Fig.1a, jedoch mit teilweise angehobenen Ventilkörper,

Fig.1c entsprechend Fig.1a, jedoch bei vollständig angehobenem Ventilkörper, und

Fig.2a-2c wie Fig.1a-1c, jedoch mit einer zweiten Variante der erfindungsgemässen Vorrichtung.

Der Spülkasten weist eine an sich bekannte Ablaufgarnitur 4, die beispielsweise mit einer im Deckel angeordneten Taste betätigt werden kann. An der Ablaufgarnitur 4 ist ein Stutzen 12 angebracht, der durch eine Oeffnung 18 im Boden 1 des Spülkastens hindurchgesteckt ist. Mittels einer Kontermutter 13 ist die Ablaufgarnitur 4 am Spülkastenboden 1 befestigt. Ein Ventilsitz 14 wirkt mit einem Ventilteller 5 zusammen. Zur Auslösung des Spülvorganges wird der Ventilteller 5 angehoben, worauf das im Spülkasten befindliche Wasser durch eine Oeffnung 2 in eine angeschlossene Klosettschüssel fliessen kann.

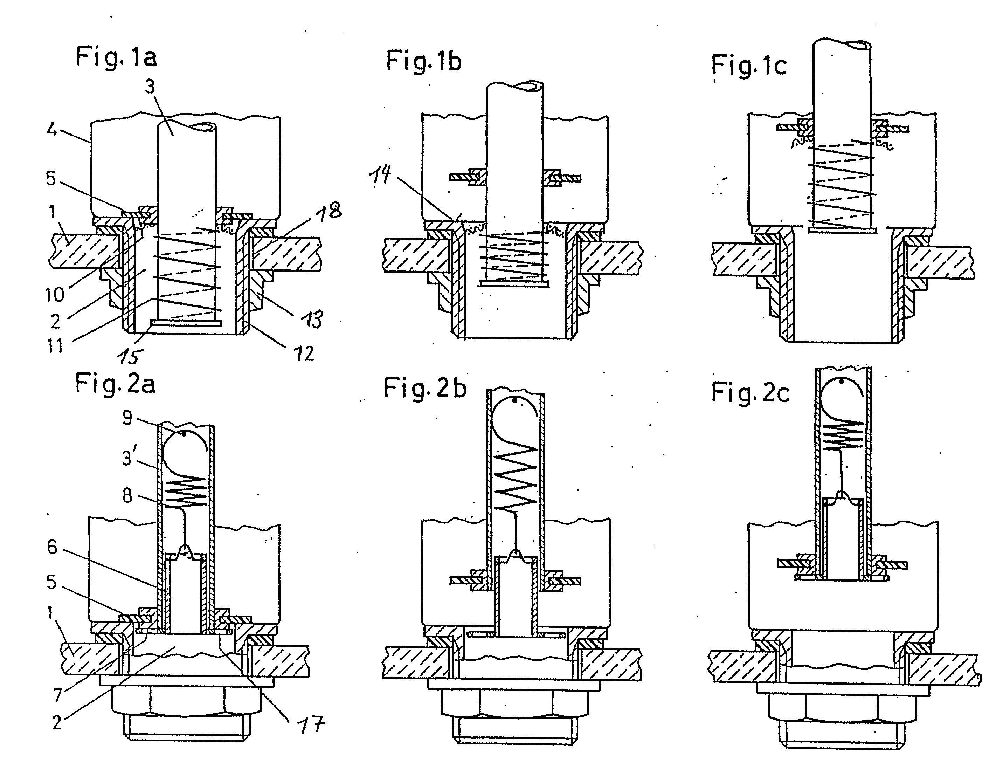

Bei der Ausführung nach den Fig.1a-1c ist der Ventilteller 5 an einem Ventilrohr 3 befestigt, das durch ein Sieb 10 hindurch in die Oeffnung 2 hineinragt. Am unteren Ende des Ventilrohres 3 ist ein Flansch 15 angebracht, auf dem eine Druckfeder 11 ruht, auf der wiederum das Sieb 10 aufliegt. Wird das Ventilrohr 3 zur Auslösung der Spülung angehoben, so bleibt das Sieb 10 infolge des Druckes des Spülwassers kurze Zeit in der in Fig.1a gezeigten Position. Bei nachlassendem Wasserdruck schiebt die Feder das Sieb 11 kontinuierlich in die in Fig.1c gezeigte Position, in welcher es an der Unterseite des Ventiltellers 5 anliegt. Das Sieb erhöht zu Beginn der Ausströmphase den Auslaufwiderstand, der beim verschieben des Siebes 10 kontinuierlich abnimmt.

Bei der Ausführung nach den Fig.2a-2c ist in ein Ventilrohr 3' von unten ein Rohrstück 6 eingesetzt, das an einer Zugfeder 8 angehängt ist, welche Feder 8 ihrerseits mit einem Halter 9 am Ventilrohr 3' befestigt ist. Am unteren Ende des Rohrstücks 6 ist eine Scheibe 7 mit mehreren Durchbrüchen 17 befestigt. Die Scheibe 7 ist vorzugsweise im oberen Bereich der Oeffnung 2 angeordnet und entspricht in ihrer Funktion dem Sieb 10. Wird das Ventilrohr 3' in die in Fig.2b gezeigte Position gebracht, so bleibt die Scheibe 7 infolge des Druckes des Spülwassers kurzzeitig der in Fig.2b gezeigten Position. Beim weiteranheben des Ventilrohres 3' und gleichzeitiger Abnahme des Wasserdrucks zieht die Feder 8 die Scheibe 7 kontinuierlich an das Ventilrohr 3', bis die in Fig.2c gezeigte Position erreicht ist. In dieser Endposition hat die Scheibe 7 praktisch keinen Einfluss mehr auf die Strömung des Spülwassers.

Die Federn 8 und 11 sind vorzugsweise so ausgebildet, dass das Sieb 10 bzw. die Scheibe 7 nur solange den Auslaufwiderstand erhöhen, als beim nicht geräuschgedämpften Spülkasten das zu Beginn der Spülung austretende impulsartige Geräusch andauern würde. Dauert eine Vollspülung etwa 5 Sekunden, so genügt es, wenn das Sieb 10 bzw. die Scheibe 8 den Auslaufwiderstand während etwa 0,5-1 Sekunden erhöhen. Die zweite Ausführungsvariante kann auch bei bereits bestehenden Spülkästen in besonders einfacher Weise eingebaut werden.

Trotz der erheblichen Vorteile der erfindungsgemässen Vorrichtung ist diese ersichtlich mit verhältnismässig wenigen, einfachen und robusten Bauteilen realisierbar.

**Patentansprüche**

1. Vorrichtung zur Geräuschdämpfung des Wasseraustrittes durch ein Auslaufventil, insbesondere durch ein Auslaufventil in einem Klosettspülkasten, mit einem im Bereich der Auslauföffnung (2) angeordneten und mit dem Ventilkörper (3, 3′) verbundenen Körper (7, 10), der während des Auslaufvorganges aus einer den Auslaufwiderstand erhöhenden und die Auslaufgeräusche dämpfenden Position herausbewegt wird, dadurch gekennzeichnet, dass der Körper (7, 10) über eine Druck- oder Zugfeder (11, 8) mit dem Ventilkörper (3, 3′) verbunden ist, welche den Körper (7, 10) nach dem Öffnen des Ventils aus der Auslauföffnung (2) herausbewegt.

2. Vorrichtung nach Anspruch 1 oder 2, dadurch gekennzeichnet, dass der Körper (10) ein Sieb ist.

3. Vorrichtung nach Anspruch 2, dadurch gekennzeichnet, dass der Ventilkörper (3) durch das Sieb (10) hindurch in die Auslauföffnung (2) hineinragt und dass die Druckfeder (11) unterhalb des Siebes angeordnet ist.

4. Vorrichtung nach Anspruch 2 oder 3, dadurch gekennzeichnet, dass der Körper (7) mittels einer über diesem angeordneten Zugfeder (8) mit dem Ventilkörper (3′) verbunden ist.

5. Vorrichtung nach Anspruch 4, dadurch gekennzeichnet, dass der Körper (7) eine mit Durchbrüchen (17) versehene Scheibe ist, die im oberen Bereich der Auslauföffnung (2) angeordnet ist.

6. Vorrichtung nach Anspruch 4 oder 5, dadurch gekennzeichnet, dass die Zugfeder (8) im Innern des Ventilrohres (3′) des Ablaufventils eines Klosettspülkastens angeordnet ist.

7. Vorrichtung nach einem der Ansprüche 4 bis 6, dadurch gekennzeichnet, dass der Körper (7), wenigstens nachdem er bewegt worden ist, am unteren Ende des Ventilkörpers (3′) anliegt.

**Claims**

1. Device for the attenuation of the noise of the water outflow through an outlet valve, in particular through an outlet valve in a toilet cistern, with a body (7, 10), which is arranged in the region of the outlet opening (2) and connected with the valve body (3, 3′) and which is moved during the outlet operation out of a position increasing the outlet resistance and attenuating the outlet noises, characterised thereby, that the body (7, 10) is connected with the valve body (3, 3′) by way of a compression or tension spring (11, 8), which moves the body (7, 10) out of the outlet opening (2) after the opening of the valve.

2. Device according to claim 1, characterised thereby, that the body (10) is a sieve.

3. Device according to claim 2, characterised thereby, that the valve body (3) projects through the sieve (10) into the outlet opening (2) and that the compression spring (11) is arranged below the sieve (10).

4. Device according to claim 2 or 3, characterised thereby, that the body (7) is connected by means of a tension spring (8) arranged thereover with the valve body (3′).

5. Device according to claim 4, characterised thereby, that the body (7) is a washer which is arranged in the upper region of the outlet opening (2) and provided with passages (17).

6. Device according to claim 4 or 5, characterised thereby, that the tension spring (8) is arranged in the interior of the valve tube (3′) of the outlet valve of a toilet cistern.

7. Device according to one of the claims 4 to 6, characterised thereby, that the body (7) lies against the lower end of the valve body (3′) at least after it has been moved.

**Revendications**

1. Dispositif pour amortir le bruit d'évacuation de l'eau à l'aide d'une soupape d'évacuation, notamment d'un clapet d'écoulement dans un réservoir de chasse d'eau de W.C., comportant un corps (7, 10), qui est disposé au voisinage de l'ouverture d'évacuation (2) et est relié au corps de soupape (3, 3′) et, pendant l'opération d'évacuation, est écarté partir d'une position augmentant la résistance d'évacuation et atténuant les bruits d'évacuation, caractérisé en ce que le corps (7, 10) est relié au corps de soupape (3, 3′) par l'intermédiaire d'un ressort de pression ou de traction (11, 8), qui écarte le corps (7, 10) de l'ouverture d'évacuation (2) après l'ouverture de la soupape.

2. Dispositif selon la revendication 1 ou 2, caractérisé en ce que le corps (10) est un filtre.

3. Dispositif selon la revendication 2, caractérisé en ce que le corps de soupape (3) pénètre à travers le filtre (10) dans l'ouverture d'évacuation (2) et que le ressort de pression (11) est disposé au-dessous du filtre.

4. Dispositif selon la revendication 2 ou 3, caractérisé en ce que le corps (7) et relié au corps de soupape (3′) au moyen d'un ressort de traction (8) disposé au-dessus de ce corps.

5. Dispositif selon la revendication 4, caractérisé en ce que le corps (7) est un disque, pourvu de passages (17) et disposé dans la partie supérieure de l'ouverture d'évacuation (2).

6. Dispositif selon la revendication 4 ou 5, caractérisé en ce que le ressort de traction (8) est disposé à l'intérieur du tube (3′) de la soupape d'évacuation d'un réservoir de chasse d'eau de W.C.

7. Dispositif selon l'une des revendications 4 à 6, caractérisé en ce qu'au moins après son déplacement, le corps (7) s'applique contre l'extrémité inférieure du corps de soupape (3′).

Fig. 1a

Fig. 1b

Fig. 1c

Fig. 2a

Fig. 2b

Fig. 2c

EP 0 333 652 B1